(19) Europäisches Patentamt
European Patent Office
Office européen des brevets

(11) EP 2 980 997 A1

(12) EUROPEAN PATENT APPLICATION
published in accordance with Art. 153(4) EPC

(43) Date of publication:
03.02.2016 Bulletin 2016/05

(51) Int Cl.:
*H04B 1/50* (2006.01)

(21) Application number: 14775250.5

(86) International application number:
PCT/JP2014/058522

(22) Date of filing: 26.03.2014

(87) International publication number:
WO 2014/157330 (02.10.2014 Gazette 2014/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.03.2013 JP 2013063908

(71) Applicant: NEC Corporation
Tokyo 108-8001 (JP)

(72) Inventor: ISHINO Tooru
Tokyo 108-8001 (JP)

(74) Representative: Glawe, Delfs, Moll
Partnerschaft mbB von
Patent- und Rechtsanwälten
Postfach 26 01 62
80058 München (DE)

(54) **WIRELESS COMMUNICATION SYSTEM**

(57) A reception filter is configured to separate a transmission frequency (TX1) and a reception frequency (RX2), while a reception filter is configured to separate a transmission frequency (TX2) and a reception frequency (RX1), whereby the size reduction of the reception filters can be achieved. This is because the difference between the transmission frequency (TX1) and the reception frequency (RX2) and the difference between the transmission frequency (TX2) and the reception frequency (RX1) each are greater than the difference between the transmission frequency (TX1) and the reception frequency (RX1) and also greater than the difference between the transmission frequency (TX2) and the reception frequency (RX2), with the result that the reception filters require no steep filter characteristics.

FIG.1

**Description**

TECHNICAL FIELD

The present invention relates to a wireless communication system that is constituted with a wireless communication device such as RRH (Remote Radio Head) used for mobile phone base stations.

BACKGROUND ART

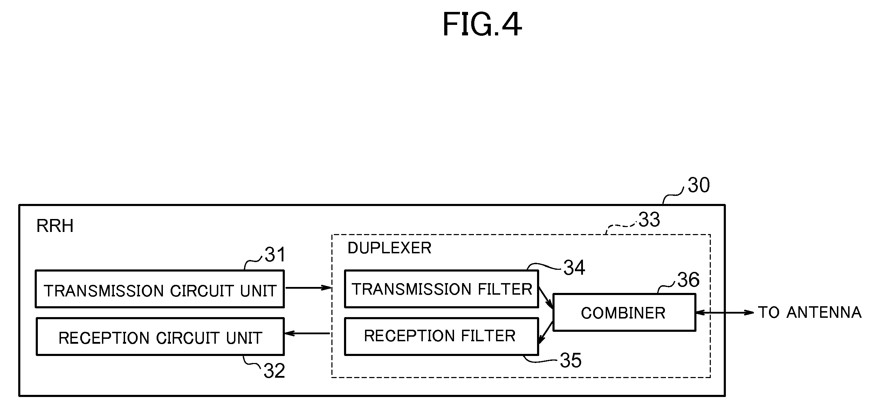

FIG. 4 is a block diagram showing RRH of Related Technique 1. Hereinafter, explanations will be provided by referring to the drawing.
An RRH 30 includes: a transmission circuit unit 31 which outputs transmission signals; a reception circuit unit 32 which inputs reception signals; and a duplexer 33 provided between the transmission circuit unit 31, the reception circuit unit 32, and an antenna, which lets through only the transmission signals from the transmission circuit unit 31 to the antenna via a transmission filter 34 and lets through only the reception signals from the antenna to the reception circuit unit 32 via a reception filter 35. The duplexer 33 includes: the transmission filter 34 which lets through only the signals of the transmission frequency; the reception filter 35 which lets through only the signals of the reception frequency; and a combiner 36 which outputs the signals transmitted through the transmission filter 34 to the antenna and outputs the signals received by the antenna to the reception filter 35.
In other words, the RRH 30 includes the transmission circuit unit 31 and the reception circuit unit 32 inside thereof, and the transmission circuit unit 31 and the reception circuit unit 32 are connected to the antenna via the duplexer 33 in which the combiner 36, the transmission filter 34, and the reception filter 35 are integrated. Note here that the transmission signal outputted from the transmission circuit unit 31 is recognized as an interference wave of an extremely high level from the reception circuit 32 side. For example, when the transmission output is the RRH 30 of 20 W, the difference between the minimum value of the reception signal and the maximum value of the transmission signal becomes 140 dB or more. Thus, it is necessary for the reception filter 35 to have a large attenuation amount (80 dB or more) of the frequency band of the transmission signal while decreasing the attenuation (loss) amount of the frequency band of the reception signal. The transmission frequency and the reception frequency are different frequencies but are quite close. For example, the transmission frequency is 2110 to 2170 MHz and the reception frequency is 1920 to 1980 MHz in "3GPP E UTRA Operating Band 1", and the distance therebetween is 190 MHz. Therefore, in order to reduce the loss of the reception band and to increase the attenuation of the transmission band as the two required performances of the reception filter 35 at the same time, an extremely steep characteristic is required for the reception filter 35. There are some methods for achieving the steep characteristic of the filter. However, when the materials, process precision, and the like are the same, it is necessary to increase the number of stages. Thus, the filter of the steeper characteristic cannot avoid becoming large-scaled.

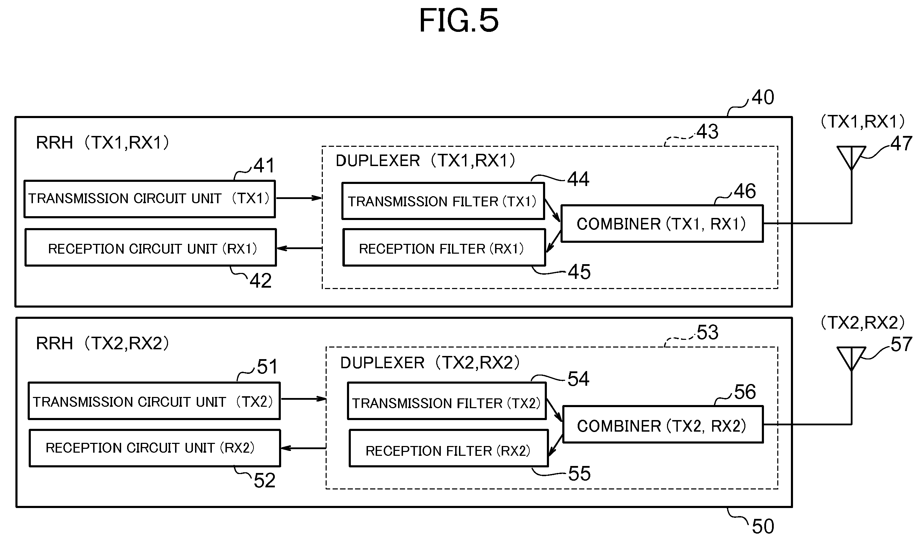

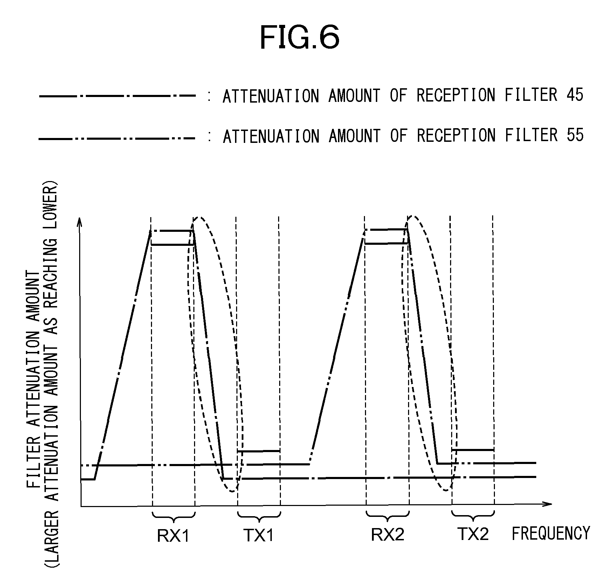

FIG. 5 is a block diagram showing a wireless communication system of Related Technique 2. FIG. 6 is a graph showing the filter characteristic of a reception filter according to Related Technique 2. Hereinafter, explanations will be provided by referring to FIG. 5 and FIG. 6.
In FIG. 5, the wireless communication system according to Related Technique 2 includes an RRH 40 and an RRH 50.
The RRH 40 includes: a transmission circuit unit 41 which outputs a first transmission signal constituted with a transmission frequency TX1; a reception circuit unit 42 which inputs a first reception signal constituted with a reception frequency signal RX1; an antenna 47 which transmits and receives the first transmission signal and the first reception signal; and a duplexer 43 provided between the transmission circuit unit 41, the reception circuit unit 42, and the antenna 47, which lets through only the first transmission signal from the transmission circuit unit 41 to the antenna 47 via a transmission filter 44 and lets through only the first reception signal from the antenna 47 to the reception circuit unit 42 via a reception filter 45.
The duplexer 43 includes: the transmission filter 44 which lets through only the signal of the transmission frequency TX1; the reception filter 45 which lets through only the signal of the reception frequency RX1; and a combiner 46 which outputs the signals transmitted through the transmission filter 44 to the antenna 47 and outputs the signals received by the antenna 47 to the reception filter 45.
The RRH 50 includes: a transmission circuit unit 51 which outputs a second transmission signal constituted with a transmission frequency TX2; a reception circuit unit 52 which inputs a second reception signal constituted with a reception frequency signal RX2; an antenna 57 which transmits and receives the second transmission signal and the second reception signal; and a duplexer 53 provided between the transmission circuit unit 51, the reception circuit unit 52, and the antenna 57, which lets through only the second transmission signal from the transmission circuit unit 51 to the antenna 57 via a transmission filter 54 and lets through only the second reception signal from the antenna 57 to the reception circuit unit 52 via a reception filter 55.

The duplexer 53 includes: the transmission filter 54 which lets through only the signal of the transmission frequency TX2; the reception filter 55 which lets through only the signal of the reception frequency RX2; and a combiner 56 which outputs the signals transmitted through the transmission filter 54 to the antenna 57 and outputs the signals received by the antenna 57 to the reception filter 55.

In FIG. 6, the lateral axis shows the frequency and the longitudinal axis shows the filter attenuation amount. The attenuation amount of the reception filter 45 is shown with an alternate long dashed and short dashed line, and the attenuation amount of the transmission filter 55 is shown with an alternate long dashed and double short dashed line. The relations regarding the transmission frequency TX1, the reception frequency RX1, the transmission frequency TX2, and the reception frequency RX2 can be expressed as follows provided that the frequencies are defined as fTX1, fRX1, fTX2, and fRX2, respectively.

$$fRX1 < fTX1 < fRX2 < fTX2$$

In LTE-Advanced, a technique called "carrier aggregation" which increases the speed of data transfer by considering a plurality of frequency bands as a single transmission band all together is specified. In order to use the technique, it is necessary to perform operations by using two RRHs corresponding to two different frequency bands as a set. In a case of a high-output base station device called "macro-cell", two RRHs are connected to a single antenna via a combiner. Whether to share a single antenna by a plurality of RRHs via a combiner or to use separate antennas by each RRH is determined according to a trade-off relation between the cost of the antenna and the cost of the combiner.

In the meantime, with a low-output base station device called "small cell" that has recently started to be released, small type antennas are used. Thereby, no combiner is required, and the antennas are connected to individual RRHs in many cases. FIG. 5 shows the form thereof. In the drawing, the two RRHs 40 and 50 are connected to the different antennas 47 and 57.

Patent Document 1: Japanese Unexamined Patent Publication 2012-222467

As described above, the technique called "carrier aggregation" which increases the speed of data transfer by considering a plurality of frequency bands as a single transmission band all together is specified in LTE-Advanced. When using this technique, each of the two RRHs 40 and 50 corresponding to the two frequency bands is prepared as shown in FIG. 5. It is assumed here that the positional relation of each of the frequency bands on the frequency axis is in a form as shown in FIG. 6. In this case, the reception filters 45 and 55 within the respective RRHs 40 and 50 are required to have the characteristics shown in FIG. 6 as described above.

Regarding the reception filter 45, the attenuation amount of the band of the reception frequency RX1 is set to be small while the attenuation amount of the band of the transmission frequency TX1 is set to be large. Similarly, regarding the reception filter 55, the attenuation amount of the band of the reception frequency RX2 is set to be small while the attenuation amount of the band of the transmission frequency TX2 is set to be large. Thus, the slope of the part surrounded by a broken line in FIG. 6 (the part between the reception frequency RX1 and the transmission frequency TX1, and the part between the reception frequency RX2 and the transmission frequency TX2) is required to be steep, and it determines the sizes of the reception filters 45 and 55.

The proportion of the duplexers 13 and 23 occupying the entire volume of the RRHs 40 and 50 is large (about 20 to 50 %), so that the sizes of the duplexers 13 and 23 determine the sizes of the RHs 40 and 50 themselves. However, unless there is breakthrough in the filters and the like using new techniques, it is difficult to decrease the sizes of the duplexers 13 and 23.

It is therefore an object of the present invention to provide a wireless communication system that is capable of decreasing the size of a reception filter used within a duplexer.

DISCLOSURE OF THE INVENTION

The wireless communication system according to the present invention includes a first wireless communication device and a second wireless communication device, wherein: the first wireless communication device includes a first transmission circuit unit which outputs a first transmission signal constituted with a first transmission frequency, a first reception circuit unit which inputs a first reception signal constituted with a second reception frequency, a first antenna which transmits and receives the first transmission signal and the first reception signal, and a first duplexer provided between the first transmission circuit unit, the first reception circuit unit, and the first antenna, which lets through only the first transmission signal from the first transmission circuit unit to the first antenna via a first transmission filter and lets through only the first reception signal from the first antenna to the first reception circuit unit via a first reception filter; the second wireless communication device includes a second transmission circuit unit which outputs a second transmission signal constituted with a second transmission frequency, a second reception circuit unit which inputs a second reception signal constituted with a first reception frequency, a second antenna which transmits and receives the second transmission signal and the second reception signal, and a second duplexer provided between the second transmission circuit unit, the second reception circuit unit, and the second antenna, which lets through only the second transmission signal from the second transmission circuit unit to the second antenna via a second transmission filter and lets through only the second reception signal from the second antenna to the second reception circuit unit via a second reception filter; and a difference between the first transmission frequency and the second reception frequency and a difference between the second transmission frequency and the first reception frequency are both greater than a difference between the first transmission frequency and the first reception frequency and a difference between the second transmission frequency and the second reception frequency.

With the related technique, the first reception filter separates the first transmission frequency and the first reception frequency while the second reception filter separates the second transmission frequency and the second reception frequency. In the meantime, with the present invention, the first reception filter separates the first transmission frequency and the second reception frequency while the second reception filter separates the second transmission frequency and the first reception frequency, thereby making it possible to decrease the sizes of the first and second reception filters of the present invention. The reason thereof is that the difference between the first transmission frequency and the second reception frequency and the difference between the second transmission frequency and the first reception frequency are both greater than the difference between the first transmission frequency and the first reception frequency and the difference between the second transmission frequency and the second reception frequency, so that the first and second reception filters of the present invention do not require a steeper filter characteristic compared to the first and second reception filters of the related technique.

BRIEF DESCRIPTION OF THE DRAWINGS

FIG. 1 is a block diagram showing a wireless communication system according to a first embodiment;
FIG. 2 is a first graph showing the filter characteristic of a reception filter according to the first embodiment;
FIG. 3 is a second graph showing the filter characteristic of the reception filter according to the first embodiment;
FIG. 4 is a block diagram showing an RRH of Related Technique 1;
FIG. 5 is a block diagram showing a wireless communication system according to Related Technique 2; and
FIG. 6 is a graph showing the filter characteristic of a reception filter according to Related Technique 2.

BEST MODES FOR CARRYING OUT THE INVENTION

Hereinafter, modes for embodying the present invention (referred to as an "embodiment" hereinafter) will be described by referring to the accompanying drawings. Note that ordinal numbers "first" and "second" used in the scope of the appended claims are omitted as appropriate.

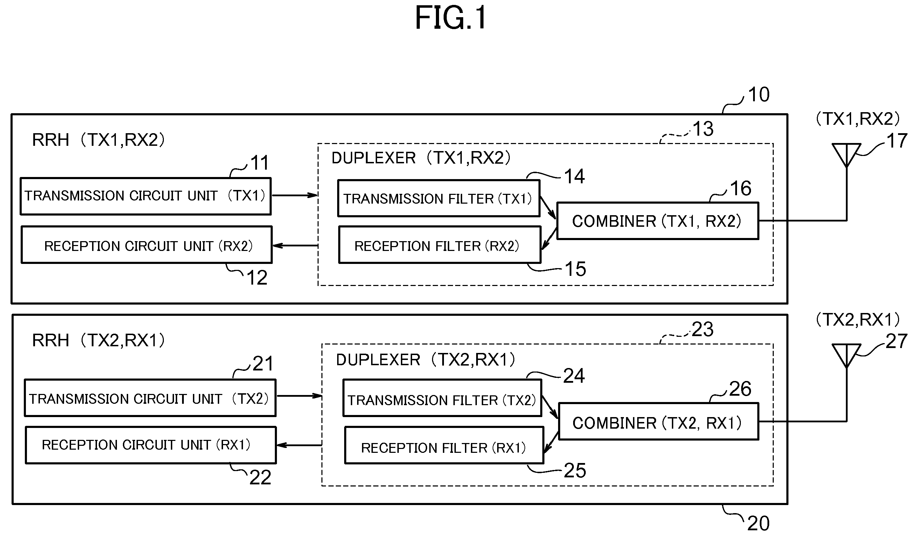

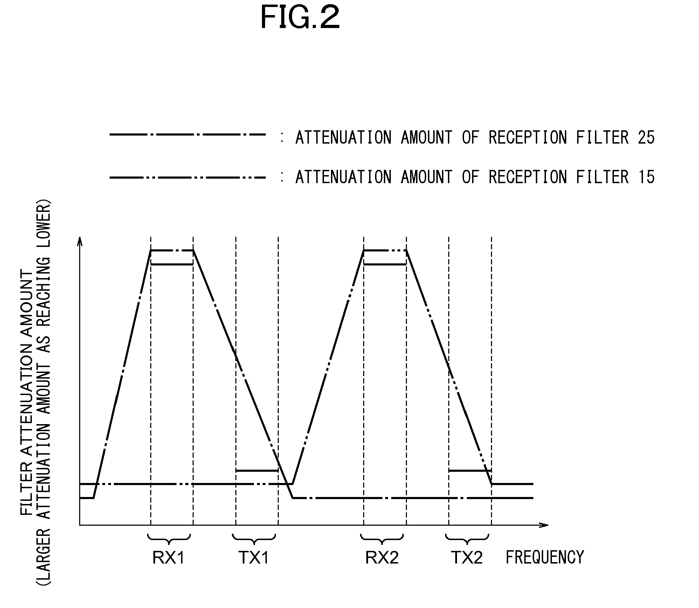

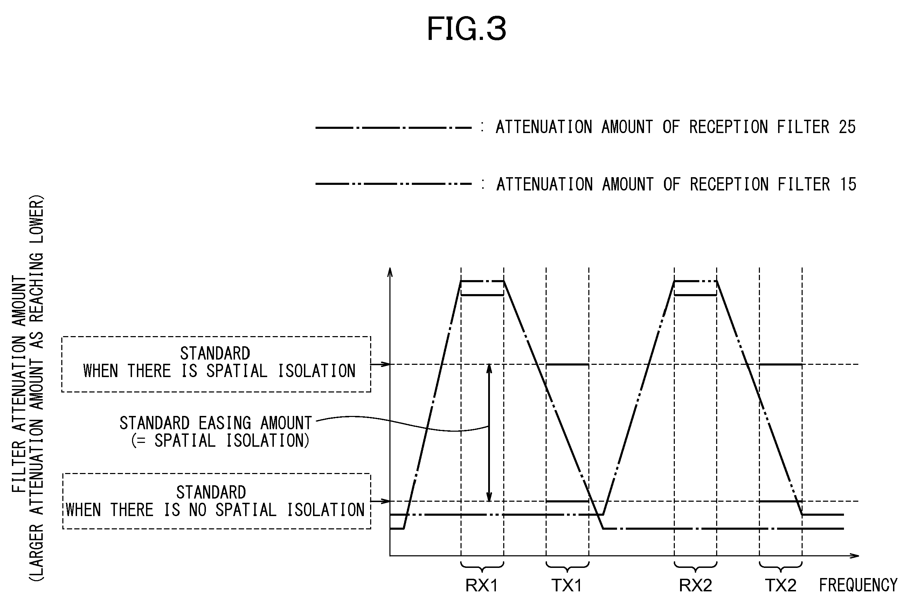

FIG. 1 is a block diagram showing a wireless communication system of a first embodiment. FIG. 2 is a first graph showing the filter characteristic of a reception filter according to the first embodiment. FIG. 3 is a second graph showing the filter characteristic of the reception filter according to the first embodiment. Hereinafter, explanations will be provided by referring to those drawings. In FIG. 1, the sections that are not directly related to the present invention are omitted.

In FIG. 1, the wireless communication system according to the first embodiment includes an RRH 10 as a first wireless communication device and an RRH 20 as a second wireless communication device.

The RRH 10 corresponds to a first transmission frequency TX1 and a second reception frequency RX2. A first transmission circuit unit 11 is an electric circuit corresponding to a transmission frequency TX1. A first reception circuit unit 12 is an electric circuit corresponding to a reception frequency RX2. A first duplexer 13 corresponds to the transmission frequency TX1 and the reception frequency RX2. A first transmission filter 14 is a band-pass filter corresponding to the transmission frequency TX1. A first reception filter 15 is a band-pass filter corresponding to the reception frequency RX2. A first combiner 16 connects the transmission circuit unit 11 side and the reception circuit unit 12 side. A first antenna 17 is for the RRH 10 which uses the transmission frequency TX1 and the reception frequency RX2.

The RRH 20 corresponds to a second transmission frequency TX2 and a first reception frequency RX1. A second transmission circuit unit 21 is an electric circuit corresponding to a transmission frequency TX2. A second reception circuit unit 22 is an electric circuit corresponding to a reception frequency RX1. A second duplexer 23 corresponds to the transmission frequency TX2 and the reception frequency RX1. A second transmission filter 24 is a band-pass filter corresponding to the transmission frequency TX2. A second reception filter 25 is a band-pass filter corresponding to the reception frequency RX1. A second combiner 16 connects the transmission circuit unit 21 side and the reception circuit unit 22 side. A second antenna 27 is for the RRH 20 which uses the transmission frequency TX2 and the reception frequency RX1.

In other words, the RRH 10 includes: the transmission circuit unit 11 which outputs a first transmission signal constituted with the transmission frequency TX1; the reception circuit unit 12 which inputs a first reception signal constituted with the reception frequency signal RX2; the antenna 17 which transmits and receives the first transmission signal and the first reception signal; and the duplexer 13 provided between the transmission circuit unit 11, the reception circuit unit 12, and the antenna 17, which lets through only the first transmission signal from the transmission circuit unit 11 to the antenna 17 via the transmission filter 14 and lets through only the first reception signal from the antenna 17 to the reception circuit unit 12 via the reception filter 15.

The duplexer 13 includes: the transmission filter 14 which lets through only the signal of the transmission frequency TX2; the reception filter 15 which lets through only the signal of the reception frequency RX2; and the combiner 16 which outputs the signals transmitted through the transmission filter 14 to the antenna 17 and outputs the signals received by the antenna 17 to the reception filter 15.

In other words, the RRH 20 includes: the transmission circuit unit 21 which outputs a second transmission signal constituted with the transmission frequency TX2; the reception circuit unit 22 which inputs a second reception signal constituted with the reception frequency signal RX1; the antenna 27 which transmits and receives the second transmission signal and the second reception signal; and the duplexer 23 provided between the transmission circuit unit 21, the reception circuit unit 22, and the antenna 27, which lets through only the second transmission signal from the transmission circuit unit 21 to the antenna 27 via the transmission filter 24 and lets through only the second reception signal from the antenna 27 to the reception circuit unit 22 via the reception filter 25.

The duplexer 23 includes: the transmission filter 24 which lets through only the signal of the transmission frequency TX2; the reception filter 25 which lets through only the signal of the reception frequency RX2; and the combiner 26 which outputs the signals transmitted through the transmission filter 24 to the antenna 27 and outputs the signals received by the antenna 27 to the reception filter 25.

In FIG. 2 and FIG. 3, the lateral axis shows the frequency and the longitudinal axis shows the filter attenuation amount. The attenuation amount of the reception filter 25 is shown with an alternate long dashed and short dashed line, and the attenuation amount of the transmission filter 15 is shown with an alternate long dashed and double short dashed line. The relations regarding the transmission frequency TX1, the reception frequency RX1, the transmission frequency TX2, and the reception frequency RX2 can be expressed as follows provided that the frequencies are defined as fTX1, fRX1, fTX2, and fRX2, respectively.

$$fRX1 < fTX1 < fRX2 < fTX2$$

As the relation described above, following combinations are also possible.

$$fRX1 < fTX1 < fTX2 < fRX2$$

$$fTX1 < fRX1 < fRX2 < fTX2$$

$$fTX1 < fRX1 < fTX2 < fRX2$$

Further, a difference f(TX1 - RX2) between the transmission frequency TX1 and the reception frequency RX2 and a difference f(TX2 - RX1) between the transmission frequency TX2 and the reception frequency RX1 are both greater than a difference f (TX1 - RX1) between the transmission frequency TX1 and the reception frequency RX1 and a difference f (TX2 - RX2) between the transmission frequency TX2 and the reception frequency RX2.

Next, the effects of the wireless communication system according to the first embodiment will be described.

With Related Technique 2 shown in FIG. 5, the reception filter 45 separates the transmission frequency TX1 and the reception frequency RX1 while the reception filter 55 separates the transmission frequency TX2 and the reception frequency RX2. In the meantime, with the first embodiment shown in FIG. 1, the reception filter 15 separates the transmission frequency TX1 and the reception frequency RX2 while the reception filter 25 separates the transmission frequency TX2 and the reception frequency RX1, thereby making it possible to decrease the sizes of the reception filters 15 and 25 of the first embodiment. The reason thereof is that the difference f (TX1 - RX2) between the transmission frequency TX1 and the reception frequency RX2 and the difference f (TX2 - RX1) between the transmission frequency TX2 and the reception frequency RX1 are both greater than the difference f (TX1 - RX1) between the transmission frequency TX1 and the reception frequency RX1 and the difference f(TX2 - RX2) between the transmission frequency TX2 and the reception frequency RX2, so that the reception filters 15, 25 of the first embodiment do not require a steeper filter characteristic compared to the reception filters 45, 55 of Related Technique 2.

Next, the wireless communication system according to the first embodiment will be described in more details.

In a case of using the carrier aggregation which increases the speed of data transfer by considering a plurality of frequency bands as a single transmission band all together in LTE-Advanced, the two RRHs 40 and 50 in the structure shown in FIG. 5 are normally used. In the first embodiment, the two RRHs 10 and 20 in the structure shown in FIG. 1 are used instead. The RRHs 10 and 20 in the structure shown in FIG. 1 are useless considering a case where each one of those is used alone. However, in a case where the those two as a set are used as a system, the structure of FIG. 1 and the structure of FIG. 5 achieve the same functions (there is no advantage or disadvantage between those in terms of the functions).

In such case, the transmission circuit unit 11 and the reception circuit unit 12 connected via the duplexer 13 use the transmission frequency TX1 and the reception frequency RX2 in the first embodiment shown in FIG. 1, while the transmission circuit unit 41 and the reception circuit unit 42 connected via the duplexer 43 use the transmission frequency TX1 and the reception frequency RX1 in Related Technique 2 shown in FIG. 5. Thus, the necessary attenuation amount of the reception filter 15 in the first embodiment also changes with respect to that of the reception filter 45 of Related Technique 2 as shown in FIG. 2. That is, regarding the reception filter 15, the attenuation amount of the band of the reception frequency RX2 is set to be small, while the attenuation amount of the band of the transmission frequency TX1 is set to be large. The difference between the transmission frequency TX1 and the reception frequency RX2 of the first embodiment is greater than the difference between the transmission frequency TX1 and the reception frequency RX1 of Related Technique 2, so that the slope of the filter characteristic of the reception filter 15 can be made gentler compared to that of the reception filter 45. This is also true for the other reception filter 25 of the first embodiment. This makes it possible to reduce the number of stages of the reception filters 15 and 25, which results in achieving small-sized reception filters 15 and 25.

There is no significance in using the structure of the first embodiment in a case of operation mode in which a single antenna is shared by two RRHs under the carrier aggregation, since it is considered that connection similar to the structure of FIG. 5 is achieved as a result of interposing the antenna. Through employing an operation mode in which separate antennas are provided to the individual RRHs of small cells, spatial isolation can be provided between the antennas. Therefore, such design can be applied.

In practice, the spatial isolation between the antennas is a limited value. Thus, the original band standard still exists. It is eased for the amount of isolation. As a specific example shown in FIG. 3, the standard of the attenuation amount of the band of the transmission frequency TX1 of the reception filter 25 is a value acquired by directly subtracting the value of the spatial isolation from the original standard. The standard of the attenuation amount of the band of the transmission frequency TX2 of the reception filter 15 is also the same. The amount of the spatial isolation changes greatly depending on the layout of the antennas and the like. However, the value thereof is about 30 dB to 60 dB, so that the easing amount of the standard also takes the same value.

In other words, with the present invention, reduction in the size of the filter part and reduction in the size of the device itself as a result thereof can be achieved through employing the design of two devices as a set while supposing multi-band operations with mobile phone base station RRHs.

While the present invention has been described above by referring to the embodiments, the present invention is not limited only to the embodiments described above. Various changes and modifications occurred to those skilled in the art can be applied to the structures and details of the present invention. Further, it is to be noted that the present invention includes the structures acquired by properly and mutually combining a part of or a whole part of the structures of each of the above-described embodiments.

While a part of or a whole part of the embodiments can be summarized as follows, the present invention is not necessarily limited only to the followings structures

(Supplementary Note 1)

A wireless communication system which includes a first wireless communication device and a second wireless communication device, wherein:

the first wireless communication device includes
a first transmission circuit unit which outputs a first transmission signal constituted with a first transmission frequency,
a first reception circuit unit which inputs a first reception signal constituted with a second reception frequency,

a first antenna which transmits and receives the first transmission signal and the first reception signal, and

a first duplexer provided between the first transmission circuit unit, the first reception circuit unit, and the first antenna, which lets through only the first transmission signal from the first transmission circuit unit to the first antenna via a first transmission filter and lets through only the first reception signal from the first antenna to the first reception circuit unit via a first reception filter;

the second wireless communication device includes

a second transmission circuit unit which outputs a second transmission signal constituted with a second transmission frequency,

a second reception circuit unit which inputs a second reception signal constituted with a first reception frequency,

a second antenna which transmits and receives the second transmission signal and the second reception signal, and

a second duplexer provided between the second transmission circuit unit, the second reception circuit unit, and the second antenna, which lets through only the second transmission signal from the second transmission circuit unit to the second antenna via a second transmission filter and lets through only the second reception signal from the second antenna to the second reception circuit unit via a second reception filter; and

a difference between the first transmission frequency and the second reception frequency and a difference between the second transmission frequency and the first reception frequency are both greater than a difference between the first transmission frequency and the first reception frequency and a difference between the second transmission frequency and the second reception frequency.

(Supplementary Note 2)

The wireless communication system as depicted in Supplementary Note 1, wherein:

the first duplexer includes
the first transmission filter which lets through only a signal of the first transmission frequency,
the first reception filter which lets through only a signal of the second reception frequency, and
a first combiner which outputs the signal transmitted through the first transmission filter to the first antenna and outputs the signal received by the first antenna to the first reception filter; and
the second duplexer includes

the second transmission filter which lets through only a signal of the second transmission frequency,
the second reception filter which lets through only a signal of the first reception frequency, and
a second combiner which outputs the signal transmitted through the second transmission filter to the second antenna and outputs the signal received by the second antenna to the second reception filter.

(Supplementary Note 3)

The wireless communication system as depicted in Supplementary Note 1 or 2, wherein
each of the first wireless communication device and the second wireless communication device is an RRH (Remote Radio Head) used for a mobile phone base station.

(Supplementary Note 4)

The wireless communication system as depicted in Supplementary Note 1, 2, or 3, which includes following four kinds of relations, provided that the first transmission frequency is fTX1, the first reception frequency is fRX1, the second transmission frequency is fTX2, and the second reception frequency is fRX2.

$$fRX1 < fTX1 < fRX2 < fTX2$$

$$fRX1 < fTX1 < fTX2 < fRX2$$

$$fTX1 < fRX1 < fRX2 < fTX2$$

$$fTX1 < fRX1 < fTX2 < fRX2$$

INDUSTRIAL APPLICABILITY

The present invention can be utilized as a wireless communication system constituted with wireless communication devices such as RRHs (Remote Radio Head) used for mobile phone base stations, for example.

This Application claims the Priority right based on Japanese Patent Application No. 2013-063908 filed on March 26, 2013 and the disclosure thereof is hereby incorporated by reference in its entirety.

REFERENCE NUMERALS

| | |
|---|---|
| 10 | RRH (TX1, RX2) |
| 11 | Transmission circuit unit (TX1) |
| 12 | Reception circuit unit (RX2) |
| 13 | Duplexer (TX1, RX2) |
| 14 | Transmission filter (TX1) |
| 15 | Reception filter (RX2) |
| 16 | Combiner (TX1, RX2) |
| 17 | Antenna (TX1, RX2) |
| 20 | RRH (TX2, RX1) |
| 21 | Transmission circuit unit (TX2) |
| 22 | Reception circuit unit (RX1) |
| 23 | Duplexer (TX2, RX1) |
| 24 | Transmission filter (TX2) |
| 25 | Reception filter (RX1) |
| 26 | Combiner (TX2, RX1) |
| 27 | Antenna (TX2, RX1) |
| 30 | RRH |
| 31 | Transmission circuit unit |
| 32 | Reception circuit unit |
| 33 | Duplexer |
| 34 | Transmission filter |
| 35 | Reception filter |
| 36 | Combiner |
| 40 | RRH (TX1, RX1) |
| 41 | Transmission circuit unit (TX1) |
| 42 | Reception circuit unit (RX1) |
| 43 | Duplexer (TX1, RX1) |
| 44 | Transmission filter (TX1) |
| 45 | Reception filter (RX1) |
| 46 | Combiner (TX1, RX1) |
| 47 | Antenna (TX1, RX1) |
| 50 | RRH (TX2, RX2) |
| 51 | Transmission circuit unit (TX2) |
| 52 | Reception circuit unit (RX2) |
| 53 | Duplexer (TX2, RX2) |
| 54 | Transmission filter (TX2) |
| 55 | Reception filter (RX2) |
| 56 | Combiner (TX2, RX2) |
| 57 | Antenna (TX2, RX2) |

**Claims**

1. A wireless communication system, comprising a first wireless communication device and a second wireless communication device, wherein:

   the first wireless communication device includes

   first transmission circuit means for outputting a first transmission signal constituted with a first transmission frequency,
   first reception circuit means for inputting a first reception signal constituted with a second reception frequency,
   first antenna means for transmitting and receiving the first transmission signal and the first reception signal, and
   first duplexer means provided between the first transmission circuit means, the first reception circuit means, and the first antenna means, for letting through only the first transmission signal from the first transmission circuit means to the first antenna means via a first transmission filter and letting through only the first reception signal from the first antenna means to the first reception circuit means via a first reception filter;

   the second wireless communication device includes

   second transmission circuit means for outputting a second transmission signal constituted with a second transmission frequency,
   second reception circuit means for inputting a second reception signal constituted with a first reception frequency,
   second antenna means for transmitting and receiving the second transmission signal and the second reception signal, and
   second duplexer means provided between the second transmission circuit means, the second reception circuit means, and the second antenna means, for letting through only the second transmission signal from the second transmission circuit means to the second antenna means via a second transmission filter and letting through only the second reception signal from the second antenna means to the second reception circuit means via a second reception filter; and
   a difference between the first transmission frequency and the second reception frequency and a difference between the second transmission frequency and the first reception frequency are both greater than a difference between the first transmission frequency and the first reception frequency and a difference between the second transmission frequency and the second reception frequency.

2. The wireless communication system as claimed in claim 1, wherein:

   the first duplexer means comprises

   the first transmission filter which lets through only a signal of the first transmission frequency,
   the first reception filter which lets through only a signal of the second reception frequency, and
   first combiner means for outputting the signal transmitted through the first transmission filter to the first antenna means and outputting the signal received by the first antenna means to the first reception filter; and

   the second duplexer means comprises

   the second transmission filter which lets through only a signal of the second transmission frequency,
   the second reception filter which lets through only a signal of the first reception frequency, and
   a second combiner means for outputting the signal transmitted through the second transmission filter to the second antenna means and outputting the signal received by the second antenna means to the second reception filter.

3. The wireless communication system as claimed in claim 1 or 2, wherein
   each of the first wireless communication device and the second wireless communication device is an RRH (Remote Radio Head) used for a mobile phone base station.

4. The wireless communication system as claimed in claim 1, 2, or 3, which includes following four kinds of relations, provided that the first transmission frequency is fTX1, the first reception frequency is fRX1, the second transmission frequency is fTX2, and the second reception frequency is fRX2.

$$fRX1 < fTX1 < fRX2 < fTX2$$

$$fRX1 < fTX1 < fTX2 < fRX2$$

$$fTX1 < fRX1 < fRX2 < fTX2$$

$$fTX1 < fRX1 < fTX2 < fRX2$$

# FIG.1

RRH (TX1,RX2) 10

TRANSMISSION CIRCUIT UNIT (TX1) 11

RECEPTION CIRCUIT UNIT (RX2) 12

DUPLEXER (TX1,RX2) 13

TRANSMISSION FILTER (TX1) 14

RECEPTION FILTER (RX2) 15

COMBINER (TX1, RX2) 16

(TX1,RX2) 17

RRH (TX2,RX1) 20

TRANSMISSION CIRCUIT UNIT (TX2) 21

RECEPTION CIRCUIT UNIT (RX1) 22

DUPLEXER (TX2,RX1) 23

TRANSMISSION FILTER (TX2) 24

RECEPTION FILTER (RX1) 25

COMBINER (TX2, RX1) 26

(TX2,RX1) 27

EP 2 980 997 A1

# FIG.2

——— : ATTENUATION AMOUNT OF RECEPTION FILTER 25

—··— : ATTENUATION AMOUNT OF RECEPTION FILTER 15

FILTER ATTENUATION AMOUNT
(LARGER ATTENUATION AMOUNT AS REACHING LOWER)

RX1 } TX1 } RX2 } TX2 } FREQUENCY

# FIG.3

————·———·———·— : ATTENUATION AMOUNT OF RECEPTION FILTER 25

————··———··———··— : ATTENUATION AMOUNT OF RECEPTION FILTER 15

FILTER ATTENUATION AMOUNT
(LARGER ATTENUATION AMOUNT AS REACHING LOWER)

STANDARD
WHEN THERE IS SPATIAL ISOLATION

STANDARD EASING AMOUNT
(= SPATIAL ISOLATION)

STANDARD
WHEN THERE IS NO SPATIAL ISOLATION

RX1    TX1    RX2    TX2    FREQUENCY

EP 2 980 997 A1

FIG.4

RRH 30

DUPLEXER 33

TRANSMISSION CIRCUIT UNIT 31

RECEPTION CIRCUIT UNIT 32

TRANSMISSION FILTER 34

RECEPTION FILTER 35

COMBINER 36

TO ANTENNA

# FIG.5

RRH（TX1,RX1） 〜40

〜43

DUPLEXER（TX1,RX1）

TRANSMISSION CIRCUIT UNIT（TX1） 〜41

TRANSMISSION FILTER（TX1） 〜44

COMBINER（TX1, RX1） 〜46

RECEPTION CIRCUIT UNIT（RX1） 〜42

RECEPTION FILTER（RX1） 〜45

（TX1,RX1） 〜47

RRH（TX2,RX2） 〜53

DUPLEXER（TX2,RX2）

TRANSMISSION CIRCUIT UNIT（TX2） 〜51

TRANSMISSION FILTER（TX2） 〜54

COMBINER（TX2, RX2） 〜56

RECEPTION CIRCUIT UNIT（RX2） 〜52

RECEPTION FILTER（RX2） 〜55

（TX2,RX2） 〜57

〜50

# FIG.6

——·——· : ATTENUATION AMOUNT OF RECEPTION FILTER 45

——··—— : ATTENUATION AMOUNT OF RECEPTION FILTER 55

FILTER ATTENUATION AMOUNT
(LARGER ATTENUATION AMOUNT AS REACHING LOWER)

RX1  TX1  RX2  TX2  FREQUENCY

## INTERNATIONAL SEARCH REPORT

| | International application No. |
|---|---|
| | PCT/JP2014/058522 |

### A. CLASSIFICATION OF SUBJECT MATTER
*H04B1/50(2006.01)i*

According to International Patent Classification (IPC) or to both national classification and IPC

### B. FIELDS SEARCHED

Minimum documentation searched (classification system followed by classification symbols)
H04B1/50

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2012-514387 A (Hollinworth Fund, L.L.C.), 21 June 2012 (21.06.2012), paragraphs [0039], [0040], [0043]; fig. 7, 9 & US 2010/0157858 A1 & EP 2374185 A & WO 2010/075190 A2 & KR 10-2011-0130389 A & CN 102439789 A | 1-4 |
| Y | JP 2000-59106 A (Murata Mfg. Co., Ltd.), 25 February 2000 (25.02.2000), abstract; fig. 1 & EP 980109 A2 & KR 10-2000-0017227 A | 1-4 |
| A | JP 2012-4725 A (Renesas Electronics Corp.), 05 January 2012 (05.01.2012), paragraphs [0017] to [0025]; fig. 1, 2 & US 2011/0304388 A1 | 1-4 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 June, 2014 (16.06.14) | 24 June, 2014 (24.06.14) |

| Name and mailing address of the ISA/ Japanese Patent Office | Authorized officer |
|---|---|
| Facsimile No. | Telephone No. |

**INTERNATIONAL SEARCH REPORT**

International application No.

PCT/JP2014/058522

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-278886 A (National Institute of Information and Communications Technology), 09 December 2010 (09.12.2010), paragraphs [0072] to [0074]; fig. 8 (Family: none) | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012222467 A

- JP 2013063908 A